# NEUE EUROPÄISCHE PATENTSCHRIFT

(11) **EP 3 243 367 B2**
(45) Veröffentlichungstag und Bekanntmachung des Hinweises auf die Entscheidung über den Einspruch: **24.08.2022**
(45) Hinweis auf die Patenterteilung: 06.11.2019
(21) Anmeldenummer: 16203913.5
(22) Anmeldetag: 14.12.2016
(51) Int. Cl.: A01B 59/042

(54) **ZUGMASCHINEN- GERÄTE KOMBINATION MIT FAHRERASSISTENZSYSTEM**
TRACTION MACHINE DEVICE COMBINATION WITH DRIVER ASSISTANCE SYSTEM
COMBINAISON D'APPAREIL DE VÉHICULE DE TRACTION AYANT UN SYSTÈME D'ASSISTANCE AU CONDUCTEUR

(30) Priorität: 10.05.2016 DE 102016108590; 27.09.2016 DE 102016118203
(43) Veröffentlichungstag der Anmeldung: 15.11.2017
(73) Patentinhaber: CLAAS Selbstfahrende Erntemaschinen GmbH, 33428 Harsewinkel (DE)
(72) Erfinder: Sagemüller, Burkhard, 33335 Gütersloh (DE); Bölling, Ralf, 33803 Steinhagen (DE); Harmann, Tim Lütke, 48324 Sendenhorst (DE); Köhler, Mathieu, 33428 Harsewinkel (DE); Waechter, Julien, 57000 Metz (FR); Noyer, Pierre, 78140 Vélizy (FR)
(74) Vertreter: CLAAS Gruppe

(56) Entgegenhaltungen:
- EP-A1- 1 321 017
- EP-A1- 2 022 319
- EP-A1- 2 434 133
- EP-A1- 2 936 969
- EP-A2- 0 838 141
- EP-A2- 0 870 654
- EP-A2- 2 401 904
- EP-B1- 1 523 872
- DE-A1- 4 239 530
- DE-A1-102005 005 557
- US-A1- 2014 172 247
- US-A1- 2014 195 126

## Beschreibung

Die Erfindung betrifft eine Zugmaschinen - Geräte - Kombination welche ein Fahrerassistenzsystem umfasst, das eingerichtet ist eine Optimierung des Zugmaschinenbetriebes für sich genommen oder der Kombination aus Zugmaschine und Gerät zu ermöglichen gemäß dem Oberbegriff des Anspruchs 1.

Zugmaschinen für sich genommen und die Kombination aus Zugmaschinen und Anbaugeräten, wie beispielsweise Transportanhängern, Ladewagen, Schwadern, Wendern, Mähwerken, Ballenpressen, Bodenbearbeitungsgeräten, Pflanzenschutzspritzen und Düngerstreuern sind hochkomplexe und kostenintensive Systeme. Daher ist es von großer Bedeutung, dass derartige Systeme effizient betrieben werden.

Üblicher Weise ist es heute so, dass die Zugmaschine und das an sie adaptierte Anbaugerät häufig unabhängig voneinander und an verschiedenen Stellen optimiert werden. Zudem wird nicht überprüft, ob die für die Zugmaschine und das Anbaugerät gefundenen optimierten Parameter auch zu einer Optimierung des Betriebs der Kombination aus Zugmaschine und dem jeweiligen Anbaugerät führt. Die voneinander getrennte Optimierung der Arbeitsweise der Zugmaschine und dem ihr zugeordneten Anbaugerät erfordert zudem ein hohes Spezialwissen des Zugmaschinenfahrers, da er die wesentlichen Einstellungen wie etwa Motor-, Getriebe- und Fahrwerkseinstellungen an der Zugmaschine und Grundeinstellungen am Anbaugerät selbst vornehmen muss, wobei die Maschinen selbst oder die jeweils verfügbaren Bedienungsanleitungen diesen Prozess nur teilweise unterstützen.

Aus der EP 0 838 141 ist beispielsweise ein System bekannt geworden, bei dem das als Pflug ausgeführte Bodenbearbeitungsgerät mit einem Jobrechner ausgestattet ist, der über ein Bussystem mit der Bedien- und Anzeigeeinheit der als Traktor ausgeführten Zugmaschine gekoppelt ist. Der Traktorfahrer kann nun über die Bedien- und Anzeigeeinheit Einstellparameter für den Pflug vorgeben. Bereits an diesem Bespiel ist gut zu erkennen, wie umfangreich das Spezialwissen des Bedieners sein muss, da bei derartigen Systemen vom Bediener gefordert wird Einstellparameter sowohl für das Zugfahrzeug als auch das Anbaugerät vorzugeben.

Es ist deshalb Aufgabe der Erfindung die beschriebenen Nachteile des Standes der Technik zu vermeiden und insbesondere ein Fahrerassistenzsystem vorzuschlagen, dass die komplexen Zusammenhänge bei der Einstellungsoptimierung einer Zugmaschine und eines adaptierten Anbaugerätes besser erfasst und berücksichtigt, sodass die Einstellungsoptimierung der Zugmaschine und des jeweiligen Anbaugerätes jeweils für sich genommen und in Kombination effektiviert und beschleunigt wird.

Diese Aufgabe wird erfindungsgemäß durch die kennzeichnenden Merkmale des Anspruchs 1 gelöst.

Indem die landwirtschaftliche Maschinenanordnung zumindest eine Zugmaschine und zumindest ein an die Zugmaschine adaptiertes Anbaugerät umfasst und mit einem den Betrieb der Zugmaschine und/oder des jeweiligen Anbaugerätes optimierenden Fahrerassistenzsystem ausgerüstet ist, welches über eine Recheneinheit und zumindest eine Anzeigeeinheit verfügt, wobei die Recheneinheit von maschineninternen Sensorsystemen generierte Informationen, externe Informationen und in der Recheneinheit hinterlegbare Informationen verarbeitet und wobei die Zugmaschine und das zumindest eine Anbaugerät eine Steuervorrichtung zur Steuerung und Regelung der Zugmaschine und/oder des Anbaugerätes umfassen, wobei das Fahrerassistenzsystem so strukturiert ist, dass es einen Zugmaschineneinstellautomaten und/oder einen Anbaugeräteinstellautomaten bildet und die jeweiligen Einstellautomaten unabhängig voneinander oder in Abhängigkeit voneinander eine Optimierung der Arbeitsweise der Zugmaschine und/oder des zumindest einen Anbaugerätes bewirken, wobei der jeweilige Einstellautomat Steuersignale generiert, die einer jeweiligen Steuereinheit zugeführt werden und dort jeweils die Ansteuerung bestimmter Arbeitsorgane der Zugmaschine und des Anbaugerätes durch Generierung entsprechender Steuersignale bewirken wird sichergestellt, dass die Einstellungsoptimierung einer Zugmaschine und des jeweiligen Anbaugerätes jeweils für sich genommen und in Kombination effektiviert und beschleunigt wird.

In einer vorteilhaften Ausgestaltung der Erfindung ist das Fahrerassistenzsystem so beschaffen, dass der Zugmaschineneinstellautomat und der Anbaugeräteinstellautomat einen gemeinsamen Einstellautomaten bilden. Dies hat den Effekt, dass der Betrieb auch sehr komplexer Maschinenanordnungen mit ein und demselben Fahrerassistenzsystem optimiert werden kann.

Indem das Fahrerassistenzsystem ein dem Zugmaschineneinstellautomaten zugeordnetes Regelwerk umfasst und wobei das dem Zugmaschineneinstellautomaten zugeordnete Regelwerk eine Optimierung der Arbeitsweise der Zugmaschine unabhängig von der Arbeitsweise des Anbaugerätes bewirkt wird erreicht, dass auch die Basiseinstellungen einer Zugmaschine für sich genommen mit dem erfindungsgemäßen Fahrerassistenzsystem optimerbar sind.

In einer vorteilhaften Weiterbildung der Erfindung umfasst das dem Zugmaschineneinstellautomaten zugeordnete Regelwerk ein Regelwerk zur Optimierung der Arbeitsweise des Anbaugerätes, wobei das Fahrerassistenzsystem die Arbeitsweise der Zugmaschine und/oder des Anbaugerätes optimiert. Eine derartige Struktur hat den Effekt, dass das Fahrerassistenzsystem auch ohne konkrete Kenntnisse über die Struktur eines bestimmten Anbaugerätes dessen Betrieb auf der Grundlage allgemeingültiger Zusammenhänge optimieren kann.

Die Optimierung des Betriebs eines Anbaugerätes mittels des erfindungsgemäßen Fahrerassistenzsystems wird dann erheblich effektiviert, wenn in einer vorteilhaften Ausgestaltung der Erfindung das Regelwerk zur Optimierung der Arbeitsweise des Anbaugerätes auf im Zugmaschineneinstellautomaten hinterlegten oder einem von dem jeweiligen Anbaugerät bereitgestellten Regelwerk basiert.

Eine hochflexible Struktur des erfindungsgemäßen Fahrerassistenzsystems ergibt sich dann, wenn das Regelwerk zur Optimierung der Arbeitsweise des Anbaugerätes in einer der Zugmaschine zugeordneten, vorzugsweise als Jobrechner ausgeführten Steuervorrichtung oder einer dem Anbaugerät zugeordneten, vorzugsweise als Jobrechner ausgeführten Steuereinrichtung hinterlegt ist.

Indem in einer weiteren vorteilhaften Ausgestaltung der Erfindung die Zugmaschine und das zumindest eine an diesem adaptierte Anbaugerät über ISO-basierte Steuereinrichtungen verfügen, kann das Fahrerassistenzsystem die von den Steuereinrichtungen gebildeten Einstellautomaten als Supervisor steuern. Dies hat insbesondere den Effekt, dass eine Optimierung des gesamten Arbeitsprozesses möglich wird.

Eine besonders effiziente und optimal an bestimmte Arbeitsbedingungen angepasste Arbeitsweise einer Maschineanordnung wird in einer vorteilhaften Weiterbildung der Erfindung dann erreicht, wenn das Fahrerassistenzsystem zur Optimierung der Arbeitsweise der Zugmaschine und/oder des an ihr adaptierten Anbaugerätes auswählbare Strategien umfasst, wobei die auswählbaren Strategien zugmaschinenspezifische Strategien, anbaugerätspezifische Strategien und/oder eine Kombination aus beiden sind.

In diesem Zusammenhang ist es zudem von Vorteil, wenn die auswählbaren Strategien zumindest eine oder mehrere der Strategien "Effizienz", "Leistung", "Arbeitsqualität", "Balance", "Bodenschonung", "Komfort" und/oder "Benutzerdefiniert" umfassen.

Besonders wirksam kann die Effizienz einer Maschinenanordnung dann gesteigert werden, wenn die Optimierungsstrategie "Effizienz" den Kraftstoffverbrauch und/oder die Betriebsstunden der Maschinenanordnung und/oder die für sogenannte Vorgewendemanöver benötigte Zeit optimiert; die Optimierungsstrategie "Leistung" auf die Steigerung der bearbeiteten Fläche und/oder verarbeiteten Masse landwirtschaftlicher Güter und/oder die Betriebsstunden der Maschinenanordnung gerichtet ist; die Optimierungsstrategie "Arbeitsqualität" die Optimierung von Einstellparametern der Zugmaschine und/oder des Anbaugerätes bewirkt; die Optimierungsstrategie "Balance" die Einstellung eines variablen Verhältnisses zwischen "Leistung" und "Effizienz" ermöglicht; die Optimierungsstrategie "Bodenschonung" reduziert den von der Maschinenanordnung verursachten Bodendruck und/oder die Bodenverdichtung und/oder optimiert den Reifenluftdruck, die Ballastierung und das Gewicht der Maschinenanordnung, die Art der Bereifungen, den Lenkmodus und/oder den Fahrwerkschlupf; die Optimierungsstrategie "Komfort" bewirkt eine benutzerdefinierte Einstellung des Schwingverhaltens und/oder Beschleunigungsverhalten und/oder Lautstärke der Maschinenanordnung; die Optimierungsstrategie "Benutzerdefiniert" ermöglicht alle verfügbaren Strategien mit variablen Anteilen miteinander zu verbinden.

In einer vorteilhaften Weiterbildung der Erfindung umfasst das Fahrerassistenzsystem ein Modul "Einsatzzweck", indem vom Bediener dialoggeführt ein Einsatzzweck bestimmt wird und wobei das Modul "Einsatzzweck" einen oder mehrere der Einsatzzwecke "Bodenbearbeitung", "Zapfwellenarbeit", "Transportarbeit" und "Frontladearbeit" umfassen kann. Dies hat vorallem den Effekt, dass die Optimierung von Parametern auf diejenigen Parameter beschränkt bleibt, die für den jeweiligen Einsatzzweck von Bedeutung sind und die für einen bestimmten Einsatzzweck standardisierten Parameter bereits vorab festlegbar sind. Insgesamt führt dies dazu, dass sich der Optimierungsprozess beschleunigt.

Die Reproduzierbarkeit und die Individualisierung der mit dem Fahrerassistenzsystem optimierten Prozessparameter lässt sich dadurch deutlich verbessern, wenn in einer vorteilhaften Ausgestaltung der Erfindung, die vom Bediener im Modul "Einsatzzweck" definierten Parameter und die nach Abarbeitung einer Optimierungsstrategie generierten Arbeitsparameter als separate oder gemeinsame Datensätze gespeichert werden und der oder die Datensätze wiederholt abrufbar und editierbar sind, wobei der oder die Datensätze insbesondere personalisiert speicherbar und wiederabrufbar sind.

Zudem kann der Betrieb einer Maschinenanordnung auch dadurch weiter optimiert werden, dass der oder die speicherbaren Datensätze spezifische Datensätze für "Arbeiten auf Feld" und "Straßenfahrt" umfassen und die spezifischen Datensätze für "Arbeiten auf Feld" und "Straßenfahrt" direkt abrufbar sind.

Neben der Geschwindigkeit des Optimierungsprozesses kann auch die Akzeptanz einer Fahrerassistenzsystem-basierten Einsatzoptimierung dadurch gesteigert werden, dass der Dialog zwischen Fahrerassistenzsystem und Bediener natürlichsprachig erfolgt.

In einer vorteilhaften Weiterbildung der Erfindung umfasst der Dialog zwischen Fahrerassistenzsystem und Bediener zumindest die Schritte:
a) Aktivierung des Fahrerassistenzsystems durch den Bediener oder automatisch bei Identifikation einer kritischen Situation
b.) Aktivierung eines Moduls "Einsatzzweck", wobei der Bediener die Editierung des Einsatzzwecks bewirkt
c.) Aktivierung eines Moduls "Feld/Straße", wobei der Bediener den Einsatz "Feld" oder "Straße" vorgibt oder das Fahrerassistenzsystem den Einsatz selbsttätig erkennt
d.) Start des Moduls "Optimierung", wobei der Bediener zur Auswahl einer Optimierungsstrategie aufgefordert wird
e.) in Abhängigkeit von der ausgewählten Optimierungsstrategie Aktivierung einer dialoggeführten Optimierung von Arbeitsparametern der Zugmaschine und/oder des an die Zugmaschine adaptierten Anbaugerätes.
Dies stellt sicher, dass die Optimierung des Arbeitsprozesses systematisch vorgenommen wird.

Eine umfassende Optimierung des Betriebes der Zugmaschine wird in einer vorteilhaften Ausgestaltung der Erfindung dann erreicht, wenn die editierbaren Arbeitsparameter der Zugmaschine einer oder mehrere der folgenden Parameter sind:
die Motordrückung; die Beschleunigung; die Wahl des geeigneten Fahrbereichs sofern der Antrieb der Zugmaschine das Betreiben in Fahrbereichen zulässt; die Fahrgeschwindigkeit und die Vorgabe von Geschwindigkeitswerten für einen an sich bekannten Tempomat; die Aktivierung und Deaktivierung eines Allradantriebs; die Aktivierung und Deaktivierung eines an sich bekannten Differentials; die Reifenstatusbestimmung, einen Vorschlag für eine geeignete Bereifung umfassend; Definition geeigneter Ballastierungsgewichte für Front- und/oder Heckanbau; Definition Radgewichte; die Kabinenfederung; die Vorderachsfederung; das Verhalten und die Art der Anbindung des Anbaugerätes an die Zugmaschine; Anpassung von Hydraulikeinstellungen, zu verwendende Ventile, erforderliche Ölmenge und Ölförderzeiten; ein optimierter Reifenluftdruck; die Zapfwellendrehzahl; die Art und Ausführung der Zapfwelle; der zu wählende Lenkungsmodus etwa der an sich bekannte Hundegang, Standardlenkung, Rückwärtsfahrt, Lenkung nach GPS - Daten und /oder Fahrprogrammen.

In analoger Weise stellt sich eine umfassende Optimierung des Betriebes eines Anbaugerätes in einer vorteilhaften Ausgestaltung der Erfindung dann ein, wenn, das Anbaugerät als Bodenbearbeitungsgerät ausgeführt ist und die editierbaren Arbeitsparameter des Anbaugerätes einer oder mehrere der folgenden Parameter sind:
Arbeitstiefe der Werkzeuge; Arbeitsbreite des Anbaugerätes; die Vorspannung von Traktionszylindern; die Anzahl und Art der verbauten Werkzeuge; die Arbeitsgeschwindigkeit des Anbaugerätes; die Einstellung der vorhandenen Werkzeuge; die Art der Anhängung des Anbaugerätes an der Zugmaschine; Art und Status einer an sich bekannten Steinsicherung; Art und Status einer Transporteinrichtung; Art und Status einer Stütz- und/oder Führungseinheit.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Darstellung der erfindungsgemäßen Maschinenanordnung
- Figur 2: eine Detailansicht des erfindungsgemäßen Fahrerassistenzsystems
- Figur 3: ein Flussbild des Verfahrens nach dem das erfindungsgemäße Fahrerassistenzsystem arbeitet
- Figur 4: eine Detailansicht des erfindungsgemäßen Fahrerassistenzsystems nach den Figuren 2 und 3.

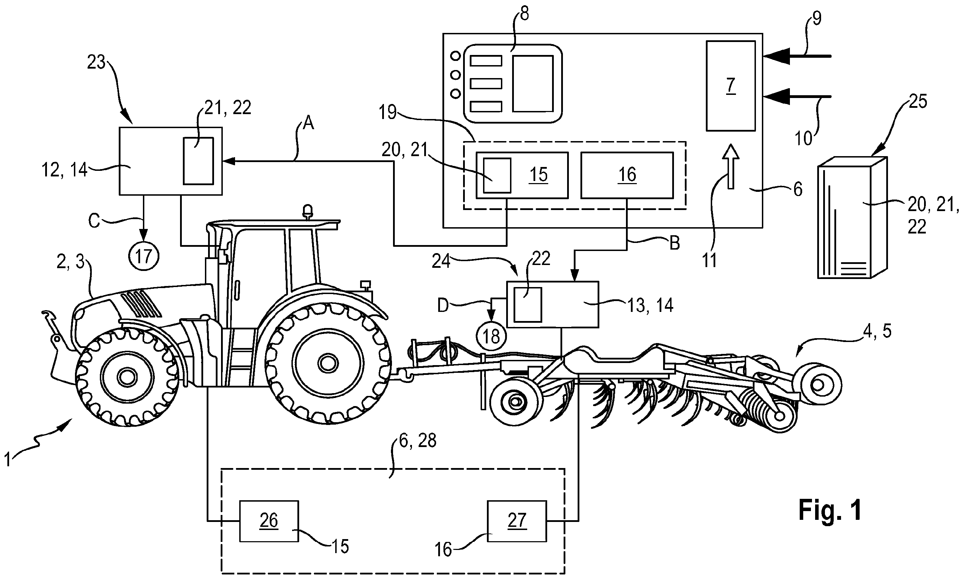

Die in Fig. 1 dargestellte landwirtschaftliche Maschinenanordnung 1 umfasst eine als Traktor 2 ausgeführte Zugmaschine 3 und zumindest ein an die Zugmaschine 3 adaptiertes, als Bodenbearbeitungsgerät 4 - hier als sogenannte Egge- ausgeführtes Anbaugerät 5. Es liegt im Rahmen der Erfindung, dass das Anbaugerät 5 als beliebiges Anbaugerät, wie etwa als Transportanhänger, Ladewagen, Schwader, Wender, Mähwerk, Ballenpresse, sonstiges Bodenbearbeitungsgeräte, etwa als Pflug, Pflanzenschutzspritze oder Düngerstreuer ausgeführt ist. In noch näher zu beschreibender Weise ist der Maschinenanordnung 1 das erfindungsgemäße, den Betrieb der Zugmaschine 3 und/oder des jeweiligen Anbaugerätes 5 optimierende Fahrerassistenzsystem 6 zugeordnet. Das erfindungsgemäße Fahrerassistenzsystem 6 umfasst zumindest eine Recheneinheit 7 und eine Anzeigeneinheit 8, wobei die Recheneinheit 7 von maschineninternen Sensorsystemen generierte Informationen 9, externe Informationen 10 und in der Recheneinheit 7 hinterlegbare Informationen 11 verarbeitet. Zudem sind der Zugmaschine 3 und dem Anbaugerät 5 ein oder mehrere Steuervorrichtungen 12, 13 zur Steuerung und Regelung der Zugmaschine 3 und/oder des jeweiligen Anbaugerätes 5 zugeordnet. Es liegt im Rahmen der Erfindung, dass der Zugmaschine 3 und dem Anbaugerät 5 separate Steuereinrichtungen 12, 13 zur Ansteuerung der verschiedensten Arbeitsorgane zugeordnet sind. Es liegt im Rahmen der Erfindung, dass die Anzeigeneinheit 8 auch mobil ausgestaltet sein kann, sodass sie vom Bediener der Maschinenanordnung 1 mitführbar ist.

Erfindungsgemäß ist das Fahrerassistenzsystem 6 so strukturiert ist, dass es einen Zugmaschineneinstellautomaten 15 und einen Anbaugeräteinstellautomaten 16 bildet wobei die jeweiligen Einstellautomaten 15, 16 unabhängig voneinander oder in Abhängigkeit voneinander eine Optimierung der Arbeitsweise der Zugmaschine 3 und des zumindest einen Anbaugerätes 5 bewirken. Erfindungsgemäß wird dies dadurch bewirkt, dass der jeweilige Einstellautomat 15, 16 Steuersignale A, B generiert, die der jeweiligen Steuereinheit 12, 13 zugeführt werden und dort jeweils die Ansteuerung bestimmter Arbeitsorgane 17, 18 der Zugmaschine 3 und des Anbaugerätes 5 durch Generierung entsprechender Steuersignale C, D bewirken.

Das Fahrerassistenzsystem 6 kann zudem so beschaffen sein, dass der Zugmaschineneinstellautomat 15 und der Anbaugeräteinstellautomat 16 einen gemeinsamen Einstellautomaten 19 bilden. Zudem kann das Fahrerassistenzsystem 6 ein dem Zugmaschineneinstellautomaten 15 zugeordnetes Regelwerk 20 umfassen welches eine Optimierung der Arbeitsweise der Zugmaschine 3 unabhängig von der Arbeitsweise des Anbaugerätes 5 bewirkt. In einer einfachen Ausgestaltungsvariante kann das dem Zugmaschineneinstellautomaten 15 zugeordnete Regelwerk 20 ein Regelwerk 21 zur Optimierung der Arbeitsweise des Anbaugerätes 5 umfassen, sodass das Fahrerassistenzsystem 6 die Arbeitsweise der Zugmaschine 3 und des Anbaugerätes 5 optimiert. Das Regelwerk 21 zur Optimierung der Arbeitsweise des Anbaugerätes 5 kann neben der unmittelbaren Hinterlegung im Zugmaschineneinstellautomaten 15 auch von dem jeweiligen Anbaugerät 5 als externes Regelwerk 22 bereitgestellt werden. Weiter liegt es im Rahmen der Erfindung, dass das Regelwerk 21, 22 zur Optimierung der Arbeitsweise des Anbaugerätes 5 in einer der Zugmaschine 3 zugeordneten, vorzugsweise als Jobrechner 23 ausgeführten Steuervorrichtung 12 oder einer dem Anbaugerät 5 zugeordneten, vorzugsweise ebenfalls als Jobrechner 24 ausgeführten Steuervorrichtung 13 hinterlegt ist. Es liegt zudem im Rahmen der Erfindung, dass die benötigten Regelwerke 20-22 auch zentral auf einem nicht näher erläuterten Server 25 hinterlegt sind.

Sind in einer vorteilhaften Ausgestaltung der Erfindung der Zugmaschine 3 und dem zumindest einen adaptierten Anbaugerät 5 ISO-basierte, als Jobrechner ausgeführte Steuereinrichtungen 26, 27 zugeordnet kann das erfindungsgemäße Fahrerassistenzsystem 6 die von den Steuereinrichtungen 26, 27 gebildeten Einstellautomaten 15, 16 als Supervisor 28 steuern, sodass sich eine Optimierung des gesamten Arbeitsprozesses einstellt.

Indem das erfindungsgemäße Fahrerassistenzsystem 6 so beschaffen ist, dass es einen Zugmaschineneinstellautomaten 15 und/oder einen Anbaugeräteautomaten 16 umfasst, die entweder unabhängig voneinander agieren oder in einem gemeinsamen Einstellautomaten 19 zusammengefasst sind, der dann in einer bevorzugten Ausgestaltung als Supervisor 28 arbeitet wird ein hochflexibles Assistenzsystem zur Optimierung einer landwirtschaftlichen Maschinenanordnung 1 geschaffen. Ein derart strukturiertes Fahrerassistenzsystem 6 schafft die Möglichkeit der Zugmaschine 3 einen Zugmaschineneinstellautomaten 15 zuzuordnen, der unabhängig von einem zu adaptierenden Anbaugerät 5 ausschließlich den Betrieb der Zugmaschine 3 optimiert. Indem der Zugmaschineneinstellautomat 15 neben dem die Optimierung der Zugmaschine 3 umfassenden Regelwerk 20 auch ein Regelwerk 21 zur Optimierung des Betriebes des Anbaugerätes 5 umfasst, ist das Fahrerassistenzsystem 6 in der Lage sowohl den Betrieb der Zugmaschine 3 alsauch des Anbaugerätes 5 zu optimieren. Das, die Optimierung des Anbaugerätes 5 bewirkende Regelwerk 21 kann dabei so strukturiert sein, dass es ein Basisregelwerk umfasst, welches unabhängig vom Anbaugerät 5 stets im Fahrerassistenzsystem 6 hinterlegt ist. In einer Ausbaustufe kann das Regelwerk 22 zur Optimierung des Betriebes des jeweiligen Anbaugerätes 5 von dem Anbaugerät 5 selbst an das Fahrerassistenzsystem 6 übergeben werden. Dies hat den Vorteil, dass das Regelwerk 22 sehr viel spezieller die Bedürfnisse, die optimalen Arbeitsbedingungen, des konkreten Anbaugerätes 5 definieren kann. Verfügen sowohl das Anbaugerät 5 als auch die Zugmaschine 3 über als Jobrechner 23, 24 ausgeführte Steuervorrichtungen 12, 13 so können die Steuereinrichtungen 12, 13 als sogenannte ISO-basierte Steuereinrichtungen 26, 27 ausgeführt sein, die jeweils das zugmaschinenbezogen und das anbaugerätbezogene Regelwerk 20, 22 umfassen, sodass das Fahrerassistenzsystem 6 die Einstellautomaten 15, 16 als Supervisor 28 steuert. Dies hat insbesondere den Effekt, dass der Arbeitsbetrieb der gesamten Maschinenanordnung unter Berücksichtigung einer großen Anzahl komplexer Zusammenhänge zwischen Zugmaschine 3 und einem oder mehreren adaptierten Anbaugeräten optimierbar wird.

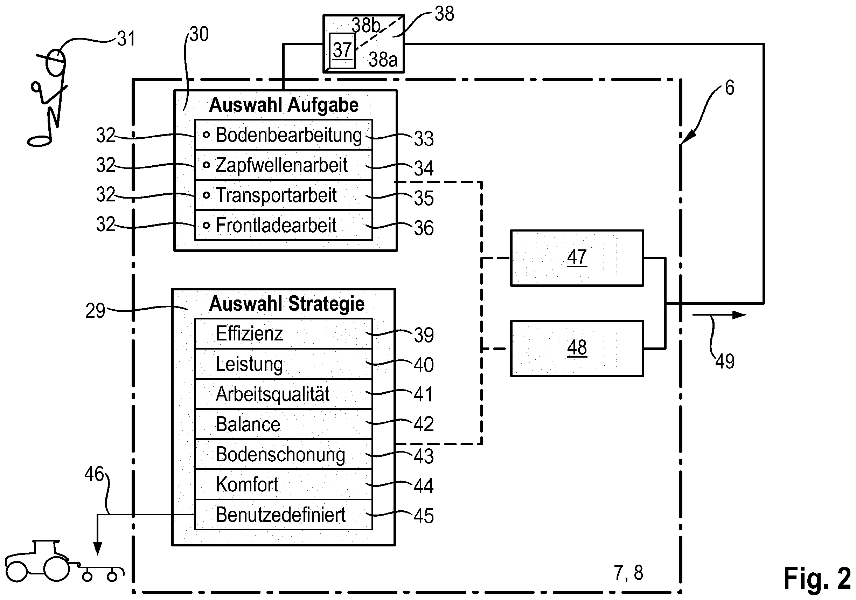

Figur 2 zeigt eine schematische Darstellung des erfindungsgemäßen Fahrerassistenzsystems 6, wobei hier Visualisierungs-, Bedien- und strukturelle Aspekt in ein und derselben Darstellung zusammengefasst sind. Das Fahrerassistenzsystem 6 umfasst einen Modul "Einsatzzweck" 30 in dem vom Bediener 31 dialoggeführt ein Einsatzzweck 32 bestimmt wird, wobei der Bediener 31 den Einsatzzweck vorab, etwa auf dem Hof bestimmen kann. Im dargestellten Ausführungsbeispiel umfasst das Modul "Einsatzzweck" 30 einen oder mehrere der Einsatzzwecke "Bodenbearbeitung" 33, "Zapfwellenarbeit" 34, "Transportarbeit" 35 und "Frontladearbeit" 36. Die vom Bediener 31 im Modul "Einsatzzweck" 30 definierten und noch näher zu beschreibenden Parameter 37 werden als Datensatz 38 gespeichert. Der Datensatz 38 kann dabei einen Basisdatensatz 38a und einen kundenspezifischen Datensatz 38b umfassen, wobei der Basisdatensatz all diejenigen Daten umfasst, die vom Bediener nicht zwingend spezifisch editiert werden müssen und für die vom Bediener im Modul "Einsatzzweck" 30 gewählte Aufgabe allgemeingültig und damit vordefiniert hinterlegt sind. Der im Modul "Einsatzzweck" 30 generierte Datensatz 38 ist wiederholt abruf- und editierbar gespeichert. Der Datensatz 38 kann entweder zentral auf einem Server 25 oder dezentral auf der Zugmaschine 3 und/oder dem Anbaugerät 5 oder einem flexiblem Speichermedium wie etwa einer Memory Card oder einem USB-Stick hinterlegt sein. Es liegt in diesem Zusammenhang im Rahmen der Erfindung, dass der oder die speicherbaren Datensätze 38 entweder personifiziert oder frei zugänglich, und damit zwischen verschiedenen Bedienern 31 unterschiedlichster Maschinenanordnungen 1 austauschbar gespeichert werden.

Zur Optimierung der Arbeitsweise der Zugmaschine 3 und/oder des an ihr adaptierten Anbaugerätes 5 umfasst das erfindungsgemäße Fahrerassistenzsystem 6 zudem noch näher zu erläuternde auswählbare Strategien 29, wobei die auswählbaren Strategien 29 zugmaschinenspezifische Strategien, anbaugerätspezifische Strategien und/oder eine Kombination aus beiden sind.

Eine effiziente Optimierung der aus Zugmaschine 3 und adaptierten Anbaugerät 5 bestehenden Maschinenanordnung 1 ergibt sich dann, wenn die auswählbaren Strategien 29 zumindest eine oder mehrere der Strategien "Effizienz" 39, "Leistung" 40, "Arbeitsqualität" 41, "Balance" (42), "Bodenschonung" 43 "Komfort" 44 und "Benutzerdefiniert" 45 umfassen.

Die Optimierungsstrategie "Effizienz" 39 kann dabei Maschinenkraftstoffverbrauch und Maschinenbetriebsstunden optimieren und/oder die Optimierung der für sogenannte Vorgewendemanöver benötigten Zeit umfassen.

Die Optimierungsstrategie "Leistung" 40 ist in einer vorteilhaften Ausgestaltung zumindest auf die Steigerung der bearbeiteten Fläche und/oder verarbeiteten Masse landwirtschaftliche Güter und/oder der Maschinenbetriebsstunden gerichtet.

Innerhalb der Optimierungsstrategie "Arbeitsqualität" 41 wird zumindest die Optimierung noch näher zu beschreibender Einstellparameter 46 der Zugmaschine 3 und/oder des Anbaugerätes 5 vorgenommen, um ein gewünschtes, von der Art des Anbaugerätes 5 abhängiges Arbeitsergebnis zu erreichen.

Die Optimierungsstrategie "Balance" 42 ist so beschaffen, dass ein variables Verhältnis zwischen "Leistung" 40 und "Effizienz" 39 einstellbar ist.

Die Optimierungsstrategie "Bodenschonung" 43 ist auf die Auswirkungen der Arbeit der Maschinenanordnung 1 auf den Boden gerichtet und optimiert Einstellparameter 46 der Zugmaschine 3 und des Anbaugerätes 5 so, dass sich eine bodenschonende Arbeitsweise ergibt. Besonders effektvoll ist diese Optimierungsstrategie, wenn etwa eine Minimierung des Bodendrucks und die damit verbundenen Bodenverdichtungsreduzierung, eine Minimierung des Reifenluftdrucks, eine ausgewogene Ballastierung und damit eine Gewichtsminimierung sowie optimierte Bereifungen, Lenkmodi und eine Minimierung des Fahrwerkschlupfs berücksichtigt oder erreicht werden.

Die Optimierungsstrategie "Komfort"44 ist im einfachsten Falle so beschaffen, dass ein benutzerdefiniertes Schwingverhalten und/oder Beschleunigungsverhalten und/oder die Lautstärke der Maschinenanordnung 1 einstellbar ist.

Die Optimierungsstrategie "Benutzerdefiniert" 45 ermöglicht dem Bediener 31 alle verfügbaren Strategien 29 mit variablen Anteilen mit einander zu verbinden, sodass Wechselwirkungen und Abhängigkeiten zwischen den Strategien 29 besser berücksichtigt werden können.

Das Fahrerassistenzsystem 6 ist zudem so beschaffen, dass es entweder in einem Dialogmodus 47 mit dem Bediener 31 oder in einem Automatikmodus 48 betrieben werden kann. In beiden Fällen findet die Kommunikation, der Dialog, mit dem Bediener 31 natürlichsprachig statt.

Weiter liegt es im Rahmen der Erfindung, dass die nach Abarbeitung des Dialogmodus 47 oder des Automatikmodus 48 generierten optimierten Einstellparameter 46 in einem Datensatz 49 in Analogie zu Datensatz 38 wiederabrufbar und editierbar abgespeichert werden. Im einfachsten Fall ist der Datensatz 49 Bestandteil des bereits beschriebenen Datensatzes 38. In Analogie zu Datensatz 38 kann auch Datensatz 49 personifiziert gespeichert und wiederabgerufen werden.

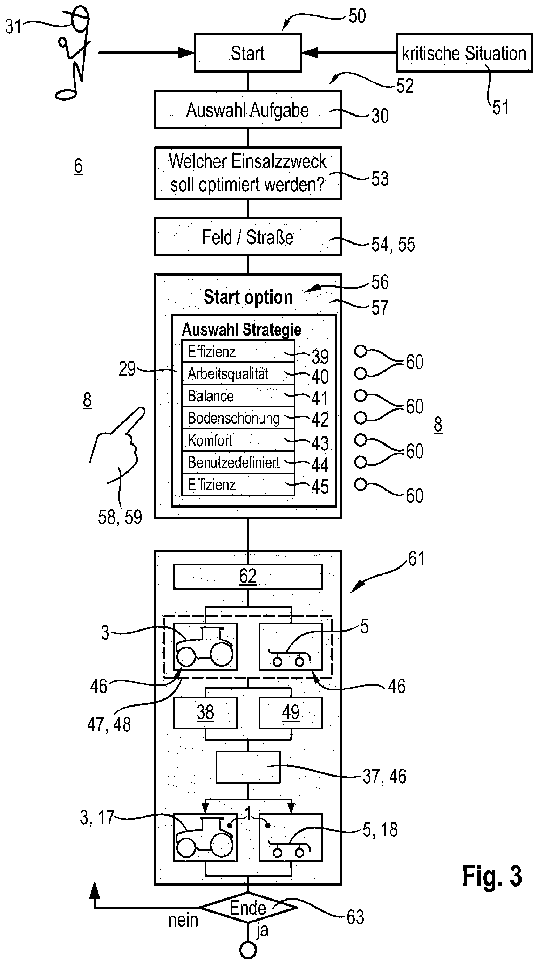

Fig. 3 beschreibt die Arbeitsweise des erfindungsgemäßen Fahrerassistenzsystems 6, insbesondere den Dialog zwischen Bediener 31 und Fahrerassistenzsystem 6 näher. In einem ersten Verfahrensschritt 50 erfolgt die Aktivierung des Fahrerassistenzsystems 6 durch den Bediener 31 oder automatisch bei Identifikation einer kritischen Situation 51.

Im folgenden Schritt 52 wird der Modul "Einsatzzweck" 30 aktiviert, wobei der Bediener 31 die Editierung des Einsatzzwecks 32 bewirkt. Im einfachsten Fall wird das Fahrerassistenzsystem 6 den Bediener 31 die Frage 53 stellen, für welchen der in Figur 2 erläuterten Einsatzzwecke 32 eine Optimierung veranlasst werden soll.

Im folgenden Verfahrensschritt 54 wird ein Modul "Feld/Straße" 55 aktiviert, wobei der Bediener 31 den Einsatz "Feld" oder "Straße" vorgibt oder das Fahrerassistenzsystem 6 den Einsatz selbsttätig erkennt. Im einfachsten Fall kann die automatische Erkennung dadurch bewirkt werden, dass der Maschinenanordnung ein GPS-Sender zugeordnet ist, mittels dessen die Position der Maschinenanordnung 1 bestimmbar ist. Denkbar ist hier auch, dass Position "Straße" oder "Feld" an Hand eines Schwellwertes für die Fahrgeschwindigkeit der Maschinenanordnung, beispielsweise 25 km/h, bestimmt wird, wobei über dem Schwellwert liegende Fahrgeschwindigkeiten als Straßenfahrt identifiziert werden. Im folgenden Schritt 56 wird ein Modul "Optimierung" 57 gestartet, wobei der Bediener 31 zur Auswahl der Optimierungsstrategie 29, 39-45 aufgefordert wird. Die Auswahl der jeweiligen Optimierungsstrategie 39-45 kann dabei je nach Beschaffenheit der Anzeigeeinheit 8 durch händische Aktivierung 58 auf einem Touchscreen-Monitor 59 oder durch Aktivierung von der jeweiligen Optimierungsstrategie 39-45 zugeordneten Aktivierungstasten 60 erfolgen.

In Abhängigkeit von der ausgewählten Optimierungsstrategie 39-45 wird in einem weiteren Verfahrensschritt 61 eine noch näher zu erläuternden dialoggeführte Optimierung 62 von Arbeitsparametern 46 der Zugmaschine 3 und/oder des an die Zugmaschine 3 adaptierten Anbaugerätes 5 aktiviert. Es liegt im Rahmen der Erfindung, dass zugleich der Betrieb mehrerer, etwa front- und heckseitig sowie seitlich an der Zugmaschine 3 adaptierter Anbaugeräte 5 optimiert wird. Wie bereits beschrieben kann die Optimierung der Arbeitsweise der Zugmaschine 3 und des oder der adaptierten Anbaugeräte 5 in einem Dialogmodus 47 oder in einem Automatikmodus 48 erfolgen. In beiden Fällen werden, wie ebenfalls bereits beschrieben, Datensätze 38, 49 generiert, die optimierte Arbeitsparameter 37, 46 der Arbeitsorgane 17, 18 der Zugmaschine 3 und des oder der Anbaugeräte 5 umfassen. Das erfindungsgemäße Fahrerassistenzsystem 6 kann so beschaffen sein, dass die ermittelten optimierten Arbeitsparameter 37, 46 entweder direkt an dem jeweiligen Arbeitsorgan 17, 18 eingestellt werden, der Bediener 31 gefragt wird, ob die ermittelten Arbeitsparameter 37, 46 eingestellt werden sollen oder nur eine Anzeige der optimierten Arbeitsparameter 37, 46 erfolgt und der Bediener 31 sodann deren Einstellung auslösen muss.

Der oder die speicherbaren Datensätze (38, 49) können zudem spezifische Datensätze für "Arbeiten auf Feld" und "Straßenfahrt" umfassen, wobei die spezifischen Datensätze (38, 49) für "Arbeiten auf Feld" und "Straßenfahrt" direkt abrufbar sind.

Nach erfolgter Optimierung des Betriebes der Maschinenanordnung 1 wird der Bediener 31 in einem Entscheidungsschritt 63 gefragt, ob die Optimierung beendet werden soll oder nicht. Je nach Entscheidung des Bedieners 31 wird sodann die Optimierung beendet oder das Fahrerassistenzsystem 6 startet von neuem mit Verfahrensschritt 50.

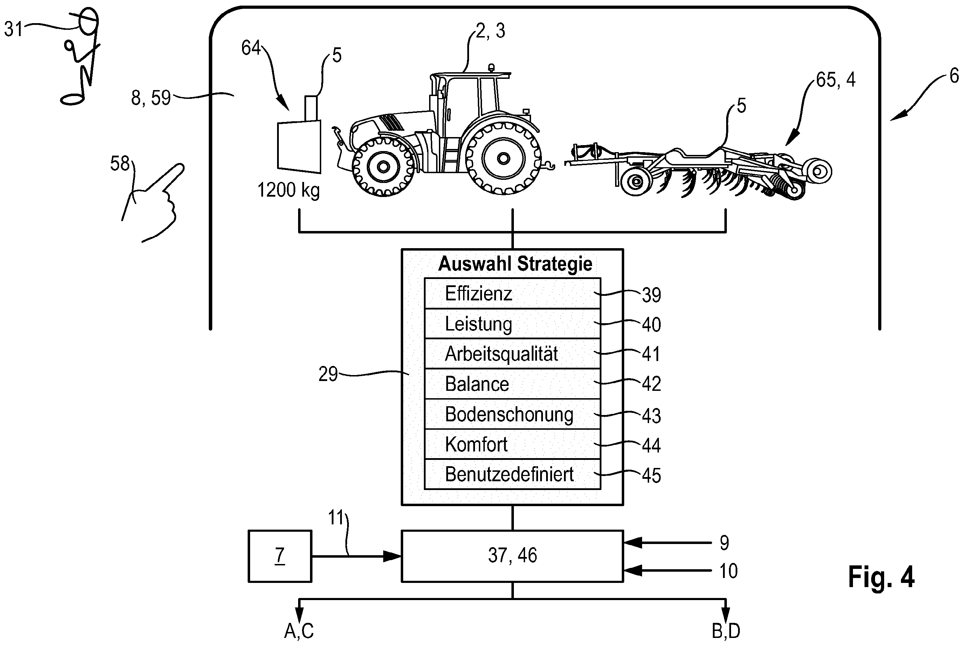

Figur 4 zeigt nun schematisch, wie mittels des erfindungsgemäßen Fahrerassistenzsystems 6 eine Optimierung der verschiedensten Parameter 37, 46 der Zugmaschine 3 und des oder der Anbaugeräte 5 vorgenommen wird. Aus Vereinfachungsgründen wird im Folgenden von einer als Touchscreen-Monitor 59 ausgeführten Anzeigeeinheit 8 ausgegangen. Es liegt im Rahmen der Erfindung, dass alle händischen Aktivierungen 58 auch mittels nicht dargestellter Tasten realisierbar sind.

Zunächst kann der Bediener 31 durch händische Aktivierung 58 bestimmen, ob die Arbeitsweise der als Traktor 2 ausgeführten Zugmaschine 3 und/oder der Anbaugeräte 5 optimiert werden soll. Im dargestellten Ausführungsbeispiel sind zwei Arten von Anbaugeräten beispielhaft dargestellt, nämlich ein Frontgewicht 64 und ein als Grubber 65 ausgeführtes Bodenbearbeitungsgerät 4.

Indem das jeweilige Ikon für Traktor 2 und/oder Anbaugerät 5 aktiviert wird öffnet sich das Dialogfeld "Auswahl Strategie" 29 und der Bediener 31 muss die gewünschte Optimierungsstrategie 39-45 auswählen. In Abhängigkeit von der gewählten Optimierungsstrategie 39-45 ermittelt dann das Fahrerassistenzsystem 6 unter Berücksichtigung der verfügbaren von maschineninternen Sensorsystemen generierten Informationen 9 und/oder den verfügbaren externen Informationen 10 und/oder den in der Recheneinheit 7 hinterlegten Informationen 11 optimierte Arbeitsparameter 37, 46 für die Zugmaschine 3 und das oder die Anbaugeräte 5. Wie bereits beschrieben werden die optimierten Arbeitsparameter 37, 46 sodann über entsprechende an den Traktor 2 oder das Anbaugerät 5 zu übermittelnde Steuersignale A-D eingestellt.

Da das Frontgewicht 64 einen originären Bestandteil der als Traktor 2 ausgeführten Zugmaschine 2 bildet, kann die Optimierung des Betriebs der Zugmaschine 2 zugleich die Optimierung der Ballastierung 64 umfassen. In diesem Fall wird ein effiziente Optimierung der Arbeitsparameter 46 mittels des erfindungsgemäßen Fahrerassistenzsystems 6 dann erreicht, wenn die editier- und optimierbaren Arbeitsparameter 46 einen oder mehrere der folgenden Arbeitsparameter 46 umfassen:
die Motordrückung; die Beschleunigung; die Wahl des geeigneten Fahrbereichs sofern der Antrieb der Zugmaschine das Betreiben in Fahrbereichen zulässt; die Fahrgeschwindigkeit und die Vorgabe von Geschwindigkeitswerten für einen an sich bekannten Tempomat; die Aktivierung und Deaktivierung eines Allradantriebs; die Aktivierung und Deaktivierung eines an sich bekannten Differentials; die Reifenstatusbestimmung, einen Vorschlag für eine geeignete Bereifung umfassend; Definition geeigneter Ballastierungsgewichte 64 für Front- und/oder Heckanbau; die Kabinenfederung; die Vorderachsfederung; das Verhalten und die Art der Anbindung des Anbaugerätes 5 an die Zugmaschine 3; Anpassung von Hydraulikeinstellungen, zu verwendende Ventile, erforderliche Ölmenge und Ölförderzeiten; ein optimierter Reifenluftdruck; die Zapfwellendrehzahl; die Art und Ausführung der Zapfwelle; der zu wählende Lenkungsmodus etwa der ans ich bekannte Hundegang, Standardlenkung, Rückwärtsfahrt, Lenkung nach GPS - Daten und /oder Fahrprogrammen.

Eine umfassende Optimierung der Arbeitsweise der Maschinenanordnung 1 ergibt sich zudem dann, wenn das Anbaugerät 5 als Bodenbearbeitungsgerät 4 und hier speziell als Grubber 65 ausgeführt ist und die editierbaren Arbeitsparameter 46 des Anbaugerätes 5 einer oder mehrere der folgenden Parameter sind:
Arbeitstiefe der Werkzeuge; Arbeitsbreite des Anbaugerätes 5; die Vorspannung der einem ansich bekannten Dreipunktanbaus zugeordneten Traktionszylindern; die Anzahl und Art der verbauten Werkzeuge; die Arbeitsgeschwindigkeit des Anbaugerätes; die Einstellung der vorhandenen Werkzeuge; die Art der Anhängung des Anbaugerätes an der Zugmaschine; Art und Status einer sogenannten Steinsicherung; Art und Status einer Transporteinrichtung; Art und Status einer Stütz- und/oder Führungseinheit.

**Bezugszeichenliste:**

| | | | |
|---|---|---|---|
| 1 | Maschinenanordnung | 31 | Bediener |
| 2 | Traktor | 32 | Einsatzzweck |
| 3 | Zugmaschine | 33 | Bodenbearbeitung |
| 4 | Bodenbearbeitungsgerät | 34 | Zapfwellenarbeit |
| 5 | Anbaugerät | 35 | Transportarbeit |
| 6 | Fahrerassistenzsystem | 36 | Frontladearbeit |
| 7 | Recheneinheit | 37 | Parameter |
| 8 | Anzeigeneinheit | 38 | Datensatz |
| 9 | interne Informationen | 38a | Basisdatensatz |
| 10 | externe Information | 38b | kundenspezifischer Datensatz |
| 11 | hinterlegbare Information | 39 | Effizienz |
| 12 | Steuervorrichtung | 40 | Leistung |
| 13 | Steuervorrichtung | 41 | Arbeitsqualität |
| 14 | Steuereinheit | 42 | Balance |
| 15 | Zugmaschineneinstellautomat | 43 | Bodenschonung |
| 16 | Anbaugeräteeinstellautomat | 44 | Komfort |
| 17 | Arbeitsorgan | 45 | Benutzerdefiniert |
| 18 | Arbeitsorgan | 46 | Arbeitsparameter |
| 19 | Einstellautomat | 47 | Dialogmodus |
| 20 | Regelwerk Traktor | 48 | Automatikmodus |
| 21 | Regelwerk Anbaugerät intern | 49 | Datensatz |
| 22 | Regelwerk Anbaugerät extern | 50 | Verfahrensschritt |
| 23 | Jobrechner | 51 | kritische Situation |
| 24 | Jobrechner | 52 | Verfahrensschritt |
| 25 | Server | 53 | Frage |
| 26 | ISO basierte Steuereinrichtung | 54 | Verfahrensschritt |
| 27 | ISO basierte Steuereinrichtung | 55 | Modul Feld/Straße |
| 28 | Supervisor | 56 | Verfahrensschritt |
| 29 | Strategie | 57 | Modul Optimierung |
| 30 | Modul "Einsatzzweck" | 58 | händische Aktivierung |
| 59 | Touchscreen-Monitor | | |
| 60 | Aktivierungstaste | | |
| 61 | Schritt e | | |
| 62 | dialoggeführte Optimierung | | |
| 63 | Entscheidungsschritt | | |
| 64 | Frontgewicht | | |
| 65 | Grubber | | |
| | | | |
| A | Steuersignal | | |
| B | Steuersignal | | |
| C | Steuersignal | | |
| D | Steuersignal | | |

## Patentansprüche

1. Landwirtschaftliche Maschinenanordnung mit zumindest einer Zugmaschine und mit zumindest einem an die Zugmaschine adaptierten Anbaugerät und mit einem den Betrieb der Zugmaschine und des jeweiligen Anbaugerätes optimierenden Fahrerassistenzsystem, welches über eine Recheneinheit und zumindest eine Anzeigeeinheit verfügt, wobei die Recheneinheit von maschineninternen Sensorsystemen generierte Informationen, externe Informationen und in der Recheneinheit hinterlegbare Informationen verarbeitet und wobei die Zugmaschine und das zumindest eine Anbaugerät eine Steuervorrichtung zur Steuerung und Regelung der Zugmaschine und des Anbaugerätes umfassen,
**dadurch gekennzeichnet,**
**dass** das Fahrerassistenzsystem (6) so strukturiert ist, dass es einen Zugmaschineneinstellautomaten (15) und einen Anbaugeräteinstellautomaten (16) bildet wobei die jeweiligen Einstellautomaten (15, 16) unabhängig voneinander oder in Abhängigkeit voneinander eine Optimierung der Arbeitsweise der Zugmaschine (3) und des zumindest einen Anbaugerätes (5) bewirken, wobei der jeweilige Einstellautomat (15, 16) Steuersignale (A, B) generiert, die einer jeweiligen Steuereinheit (12, 13) zugeführt werden und dort jeweils die Ansteuerung bestimmter Arbeitsorgane (17, 18) der Zugmaschine (3) und des Anbaugerätes (5) durch Generierung entsprechender Steuersignale (C, D) bewirken.

2. Landwirtschaftliche Maschinenanordnung nach Anspruch 1
**dadurch gekennzeichnet,**
**dass** der Zugmaschineneinstellautomat (15) und der Anbaugeräteinstellautomat (16) einen gemeinsamen Einstellautomaten (19) bilden.

3. Landwirtschaftliche Maschinenanordnung nach Anspruch 1 oder 2
**dadurch gekennzeichnet,**
**dass** das Fahrerassistenzsystem (6) ein dem Zugmaschineneinstellautomaten (15) zugeordnetes Regelwerk (20) umfasst und wobei das dem Zugmaschineneinstellautomaten (15) zugeordnete Regelwerk (20) eine Optimierung der Arbeitsweise der Zugmaschine (3) unabhängig von der Arbeitsweise des Anbaugerätes (5) bewirkt.

4. Landwirtschaftliche Maschinenanordnung nach Anspruch 3
**dadurch gekennzeichnet,**
**dass** das dem Zugmaschineneinstellautomaten (15) zugeordnete Regelwerk (21) ein Regelwerk (21) zur Optimierung der Arbeitsweise des Anbaugerätes (5) umfasst und das Fahrerassistenzsystem (6) die Arbeitsweise der Zugmaschine (3) und/oder des Anbaugerätes (5) optimiert.

5. Landwirtschaftliche Maschinenanordnung nach Anspruch 4
**dadurch gekennzeichnet,**
**dass** das Regelwerk (21, 22) zur Optimierung der Arbeitsweise des Anbaugerätes (5) auf im Zugmaschineneinstellautomaten (15) hinterlegten Regelwerk (21) oder einem von dem jeweiligen Anbaugerät bereitgestellten Regelwerk (22) basiert.

6. Landwirtschaftliche Maschinenanordnung nach Anspruch 5
**dadurch gekennzeichnet,**
**dass** das Regelwerk (21, 22) zur Optimierung der Arbeitsweise des Anbaugerätes (5) in einer der Zugmaschine (3) zugeordneten, vorzugsweise als Jobrechner (23) ausgeführten Steuervorrichtung (12) oder einer dem Anbaugerät (5) zugeordneten, vorzugsweise als Jobrechner (24) ausgeführten Steuereinrichtung (13) hinterlegt ist.

7. Landwirtschaftliche Maschinenanordnung nach einem der vorhergehenden Ansprüche
**dadurch gekennzeichnet,**
**dass** die Zugmaschine (3) und das zumindest eine an diesem adaptierte Anbaugerät (5) ISO-basierte Steuereinrichtungen (26, 27) umfassen und das Fahrerassistenzsystem (6) die von den Steuereinrichtungen (26, 27) gebildeten Einstellautomaten (15, 16) als Supervisor (28) steuert, sodass sich eine Optimierung des gesamten Arbeitsprozesses einstellt.

8. Landwirtschaftliche Maschinenanordnung nach einem der vorhergehenden Ansprüche
**dadurch gekennzeichnet,**
**dass** das Fahrerassistenzsystem (6) zur Optimierung der Arbeitsweise der Zugmaschine (3) und/oder des an ihr adaptierten Anbaugerätes (5) auswählbare Strategien (29) umfasst, wobei die auswählbaren Strategien (29) zugmaschinenspezifische Strategien, anbaugerätspezifische Strategien und/oder eine Kombination aus beiden sind.

9. Landwirtschaftliche Maschinenanordnung nach Anspruch 8
**dadurch gekennzeichnet,**
**dass** die auswählbaren Strategien (29) zumindest eine oder mehrere der Strategien "Effizienz" (39), "Leistung" (40), "Arbeitsqualität" (41), "Balance" (42), "Bodenschonung" (43), "Komfort" (44) und/oder "Benutzerdefiniert" (45) umfasst.

10. Landwirtschaftliche Maschinenanordnung nach Anspruch 9
**dadurch gekennzeichnet,**
**dass** die Optimierungsstrategie "Effizienz" (39) den Kraftstoffverbrauch und/oder die Betriebsstunden der Maschinenanordnung (1) und/oder die für sogenannte Vorgewendemanöver benötigten Zeit optimiert; die Optimierungsstrategie "Leistung" (40) auf die Steigerung der bearbeiteten Fläche und/oder verarbeiteten Masse landwirtschaftlicher Güter und/oder die Betriebsstunden der Maschinenanordnung (1) gerichtet ist; die Optimierungsstrategie "Arbeitsqualität" (41) die Optimierung von Einstellparametern (46) der Zugmaschine (3) und/oder des Anbaugerätes (5) bewirkt; die Optimierungsstrategie "Balance" (42) die Einstellung eines variablen Verhältnisses zwischen "Leistung" (40) und "Effizienz" (39) ermöglicht; die Optimierungsstrategie "Bodenschonung" (43) reduziert den von der Maschinenanordnung (1) verursachten Bodendruck und/oder die Bodenverdichtung und/oder optimiert den Reifenluftdruck, die Ballastierung und das Gewicht der Maschinenanordnung, die Art der Bereifungen, den Lenkmodus und/oder den Fahrwerkschlupf; die Optimierungsstrategie "Komfort" (44) bewirkt eine benutzerdefinierte Einstellung des Schwingverhaltens und/oder Beschleunigungsverhalten und/oder der Lautstärke der Maschinenanordnung (1); die Optimierungsstrategie "Benutzerdefiniert" (45) ermöglicht alle verfügbaren Strategien 29 mit variablen Anteilen miteinander zu verbinden.

11. Landwirtschaftliche Maschinenanordnung nach einem der vorhergehenden Ansprüche
**dadurch gekennzeichnet,**
**dass** das Fahrerassistenzsystem (6) einen Modul "Einsatzzweck" (30) umfasst, indem vom Bediener (31) dialoggeführt ein Einsatzzweck (32) bestimmt wird und wobei das Modul "Einsatzzweck" (30) einen oder mehrere der Einsatzzwecke "Bodenbearbeitung" (33), "Zapfwellenarbeit" (34), "Transportarbeit" (35) und "Frontladearbeit" (36) umfassen kann.

12. Landwirtschaftliche Maschinenanordnung nach Anspruch 11
**dadurch gekennzeichnet,**
**dass** die vom Bediener im Modul "Einsatzzweck" (30) definierten Parameter (37) und die nach Abarbeitung einer Optimierungsstrategie (29) generierten Arbeitsparameter (46) als separate oder gemeinsamer Datensatz (38, 49) gespeichert werden und der oder die Datensätze (38, 49) wiederholt abrufbar und editierbar sind, wobei der oder die Datensätze (38, 49) insbesondere personifiziert speicherbar und wiederabrufbar sind.

13. Landwirtschaftliche Maschinenanordnung nach einem der vorhergehenden Ansprüche
**dadurch gekennzeichnet,**
**dass** der oder die speicherbaren Datensätze (38, 49) spezifische Datensätze für "Arbeiten auf Feld" und "Straßenfahrt" umfassen und die spezifischen Datensätze (38, 49) für "Arbeiten auf Feld" und "Straßenfahrt" direkt abrufbar sind.

14. Landwirtschaftliche Maschinenanordnung nach einem der vorhergehenden Ansprüche
**dadurch gekennzeichnet,**
**dass** der Dialog zwischen Fahrerassistenzsystem (6) und Bediener (31) natürlichsprachig erfolgt.

15. Landwirtschaftliche Maschinenanordnung nach einem der vorhergehenden Ansprüche
**dadurch gekennzeichnet,**
**dass** der Dialog zwischen Fahrerassistenzsystem (6) und Bediener (31) zumindest die Schritte
a) Aktivierung des Fahrerassistenzsystems (6) durch den Bediener (31) oder automatisch bei Identifikation einer kritischen Situation (51)
b.) Aktivierung eines Moduls "Einsatzzweck" (30), wobei der Bediener (31) die Editierung des Einsatzzwecks (32) bewirkt
c.) Aktivierung eines Moduls "Feld/Straße" (55), wobei der Bediener (31) den Einsatz "Feld" oder "Straße" vorgibt oder das Fahrerassistenzsystem (6) den Einsatz selbsttätig erkennt
d.) Start des Moduls "Optimierung" (57), wobei der Bediener (31) zur Auswahl einer Optimierungsstrategie (29) aufgefordert wird
e.) in Abhängigkeit von der ausgewählten Optimierungsstrategie (29) Aktivierung einer dialoggeführten Optimierung (62) von Arbeitsparametern (37, 46) der Zugmaschine (3) und/oder des an die Zugmaschine (3) adaptierten Anbaugerätes (5) umfasst.

16. Landwirtschaftliche Maschinenanordnung nach Anspruch 15
**dadurch gekennzeichnet,**
**dass** die editierbaren Arbeitsparameter (37, 46) der Zugmaschine (3) einer oder mehrere der folgenden Parameter sind:
die Motordrückung; die Beschleunigung; die Wahl des geeigneten Fahrbereichs sofern der Antrieb der Zugmaschine (3) das Betreiben in Fahrbereichen zulässt; die Fahrgeschwindigkeit und die Vorgabe von Geschwindigkeitswerten für einen an sich bekannten Tempomat; die Aktivierung und Deaktivierung eines Allradantriebs; die Aktivierung und Deaktivierung eines an sich bekannten Differentials; die Reifenstatusbestimmung, einen Vorschlag für eine geeignete Bereifung umfassend;
Definition geeigneter Ballastierungsgewichte (64) für Front- und/oder Heckanbau; die Kabinenfederung; die Vorderachsfederung; das Verhalten und die Art der Anbindung des Anbaugerätes an die Zugmaschine (3); Anpassung von Hydraulikeinstellungen, zu verwendende Ventile, erforderliche Ölmenge und Ölförderzeiten; ein optimierter Reifenluftdruck; die Zapfwellendrehzahl; die Art und Ausführung der Zapfwelle; der zu wählende Lenkungsmodus etwa der an sich bekannte Hundegang, Standardlenkung, Rückwärtsfahrt, Lenkung nach GPS - Daten und /oder Fahrprogrammen.

17. Landwirtschaftliche Maschinenanordnung nach Anspruch 15
**dadurch gekennzeichnet,**
**dass** das Anbaugerät (5) als Bodenbearbeitungsgerät (4, 65) ausgeführt ist und die editierbaren Arbeitsparameter (37, 46) des Anbaugerätes (5) einer oder mehrere der folgenden Parameter sind:
Arbeitstiefe der Werkzeuge; Arbeitsbreite des Anbaugerätes (5); die Vorspannung von Traktionszylindern; die Anzahl und Art der verbauten Werkzeuge; die Arbeitsgeschwindigkeit des Anbaugerätes (5); die Einstellung der vorhandenen Werkzeuge; die Art der Anhängung des Anbaugerätes (5) an der Zugmaschine (3); Art und Status einer ans ich bekannten Steinsicherung; Art und Status einer Transporteinrichtung; Art und Status einer Stütz- und/oder Führungseinheit.

## Claims

1. Agricultural machine arrangement having at least one tractor and having at least one implement adapted to the tractor and having a driver assistance system which optimises the operation of the tractor and of the respective implement and has a computing unit and at least one display unit, the computing unit processing information generated by sensor systems internal to the machine, external information and information which can be stored in the computing unit, and the tractor and the at least one implement comprising a control device for controlling and regulating the tractor and the implement,
**characterized**
**in that** the driver assistance system (6) is structured in such a way that it forms a tractor setting automaton (15) and an implement setting automaton (16), the respective setting automatons (15, 16) effecting an optimisation of the operation of the tractor (3) and of the at least one implement (5) independently of one another or as a function of one another, the respective automatic adjuster (15, 16) generating control signals (A, B) which are fed to the respective control unit (12, 13, 14) and there respectively effect the actuation of specific working members (17, 18) of the tractor (3) and of the implement (5) by generating corresponding control signals (C, D).

2. Agricultural machine arrangement according to claim 1,
**characterised**
**in that** the automatic tractor adjuster (15) and the automatic implement adjuster (16) form a common automatic adjuster (19).

3. Agricultural machine arrangement according to claim 1 or 2,
characterised
in thatthe driver assistance system (6) comprises a control system (20) associated with the automatic tractor setting device (15) and wherein the control system (20) associated with the automatic tractor setting device (15) effects an optimisation of the operation of the tractor (3) independently of the operation of the implement (5).

4. Agricultural machine arrangement according to claim 3,
**characterised**
**in that** the control system (21) associated with
the automatic tractor setting device (15) comprises a control system (21) for optimising the operation of the implement (5) and the driver assistance system (6) optimises the operation of the tractor (3) and/or the implement (5).

5. Agricultural machine arrangement according to claim 4,
**characterised**
**in that** the control system (21, 22) for optimising the operation of the implement (5) is based on the control system (21) stored in the automatic tractor setting device (15) or on a control system (22) provided by the respective implement.

6. Agricultural machine arrangement according to claim 5,
characterised
in thatthe control system (21, 22) for optimising the mode of operation of the implement (5) is stored in a control device (12) associated with the tractor (3), preferably designed as a job computer (23), or in a control device (13) associated with the implement (5), preferably designed as a job computer (24).

7. Agricultural machine arrangement according to one of the preceding claims,
**characterised**
**in that** the tractor (3) and the at least one implement (5) adapted thereto comprise ISO-based control devices (26, 27) and the driver assistance system (6) controls the automatic setting devices (15, 16) formed by the control devices (26, 27) as supervisor (28), so that an optimisation of the entire working process is achieved.

8. Agricultural machine arrangement according to one of the preceding claims,
characterised
in thatthe driver assistance system (6) comprises selectable strategies (29) for optimising the operation of the tractor (3) and/or the implement (5) adapted to it, wherein the selectable strategies (29) are tractor-specific strategies, implement-specific strategies and/or a combination of both.

9. Agricultural machine arrangement according to claim 8
**characterised in**
**that** the selectable strategies (29) comprise at least one or more of the strategies "efficiency" (39), "performance" (40), "quality of work" (41), "balance" (42), "soil conservation" (43), "comfort" (44) and/or "user defined" (45).

10. Agricultural machine arrangement according to claim 9,
**characterised**
**in that** the optimisation strategy "efficiency" (39) optimises the fuel consumption and/or the operating hours of the machine arrangement (1) and/or the time required for so-called headland manoeuvres; the optimisation strategy "performance" (40) is directed towards increasing the worked area and/or processed mass of agricultural goods and/or the operating hours of the machine arrangement (1); the optimisation strategy "quality of work" (41) effects the optimisation of setting parameters (46) of the tractor (3) and/or of the implement (5); the optimisation strategy "balance" (42) enables the setting of a variable ratio between "performance" (40) and "efficiency" (39); the optimisation strategy "ground protection" (43) reduces the ground pressure and/or the ground compaction caused by the machine arrangement (1) and/or optimises the tyre pressure, the ballasting and the weight of the machine arrangement, the type of tyres, the steering mode and/or the chassis slip; the optimisation strategy "comfort" (44) effects a user-defined setting of the swing behaviour and/or acceleration behaviour and/or the sound level of the machine arrangement (1); the optimisation strategy "user-defined" (45) makes it possible to combine all available strategies 29 with variable proportions.

11. Agricultural machine arrangement according to one of the preceding claims,
**characterised**
**in that** the driver assistance system (6) comprises a "purpose of use" module (30), in that a purpose of use (32) is determined in dialogue-guided manner by the operator (31) and wherein the "purpose of use" module (30) can comprise one or more of the purposes of use "soil cultivation" (33), "power take-off work" (34), "transport work" (35) and "front loading work" (36).

12. Agricultural machine arrangement according to claim 11 **characterised in**,
**in that** the parameters (37) defined by the operator in the "application purpose" module (30) and the working parameters (46) generated after execution of an optimisation strategy (29) are stored as a separate or common data record (38, 49) and the data record or records (38, 49) can be repeatedly called up and edited, the data record or records (38, 49) being able to be stored and called up again in particular in a personalised manner.

13. Agricultural machine arrangement according to one of the preceding
claims**characterised in**
**that** the storable data record or records (38, 49) comprise specific data records for "working in the field" and "road travel" and the specific data records (38, 49) for "working in the field" and "road travel" are directly retrievable.

14. Agricultural machine arrangement according to one of the preceding claims,
**characterised**
**in that** the dialogue between the driver assistance system (6) and the operator (31) takes place in natural language.

15. Agricultural machine arrangement according to one of the preceding
claims**characterised in**
**that** the dialogue between driver assistance system (6) and operator (31) comprises at least the steps of
a) activation of the driver assistance system (6) by the operator (31) or automatically on identification of a critical situation (51)
b) Activation of a "purpose of use" module (30), wherein the operator (31) effects the editing of the purpose of use (32)
c) Activation of a "field/road" module (55), wherein the operator (31) specifies the use "field" or "road" or the driver assistance system (6) automatically detects the use
d) Start of the "optimisation" module (57), whereby the operator (31) is prompted to select an optimisation strategy (29).
e) Depending on the selected optimisation strategy (29), activation of a dialogue-guided optimisation (62) of working parameters (37, 46) of the tractor (3) and/or of the implement (5) adapted to the tractor (3).

16. Agricultural machine arrangement according to claim 15
**characterised in**
**that** the editable working parameters (37, 46) of the tractor (3) are one or more of the following parameters:
the engine depression; the acceleration; the selection of the appropriate driving range if the drive of the tractor (3) allows operation in driving ranges; the driving speed and the setting of speed values for a per se known cruise control; the activation and deactivation of an all-wheel drive; the activation and deactivation of a per se known differential; the tyre status determination, comprising a suggestion for an appropriate tyre; definition of appropriate ballast weights (64) for front and/or rear attachment; the cab suspension; the front axle suspension; the behaviour and type of attachment of the implement to the tractor (3); adjustment of hydraulic settings, valves to be used, required oil quantity and oil delivery times; an optimised tyre air pressure; the PTO speed; the type and design of the PTO shaft; the steering mode to be selected such as the per se known crab steering, standard steering, reversing, steering according to GPS data and/or driving programmes.

17. Agricultural machine arrangement according to claim 15
**characterised in**
**that** the implement (5) is designed as a soil cultivation implement (4, 65) and the editable working parameters (37, 46) of the implement (5) are one or more of the following parameters:
Working depth of the tools; Working width of the implement (5); The pre-tensioning of traction cylinders; The number and type of tools installed; The working speed of the implement (5); The setting of the tools present; The type of hitching of the implement (5) to the tractor (3); The type and status of a stone safety device known to me; The type and status of a transport device; The type and status of a support and/or guide unit.

## Revendications

1. Agencement de machines agricoles avec au moins un tracteur et avec au moins un outil porté adapté au tracteur et avec un système d'assistance au conducteur optimisant le fonctionnement du tracteur et de l'outil porté respectif, qui dispose d'une unité de calcul et d'au moins une unité d'affichage, l'unité de calcul traitant des informations générées par des systèmes de capteurs internes à la machine, des informations externes et des informations pouvant être enregistrées dans l'unité de calcul, et le tracteur et l'au moins un outil porté comprenant un dispositif de commande pour la commande et la régulation du tracteur et de l'outil porté,
caractérisé en ce
en ce que le système d'assistance au conducteur (6) est structuré de telle sorte qu'il forme un automate de réglage du tracteur (15) et un automate de réglage de l'outil porté (16), les automates de réglage respectifs (15, 16) provoquant, indépendamment l'un de l'autre ou en fonction l'un de l'autre, une optimisation du mode de fonctionnement du tracteur (3) et de l'au moins un outil porté (5), l'automate de réglage respectif (15, 16) générant des signaux de commande (A, B) qui sont amenés à l'unité de commande respective (12, 13, 14) et y provoquent respectivement la commande de certains organes de travail (17, 18) du tracteur (3) et de l'outil porté (5) par génération de signaux de commande correspondants (C, D).

2. Agencement de machine agricole selon la revendication 1,
**caractérisé en**
**ce que** l'automate de réglage de tracteur (15) et l'automate de réglage d'outil porté (16) forment un automate de réglage commun (19).

3. Agencement de machines agricoles selon la revendication 1 ou 2,
**caractérisé en**
**ce que** le système d'assistance au conducteur (6) comprend un système de régulation (20) associé à l'automate de réglage du tracteur (15) et le système de régulation (20) associé à l'automate de réglage du tracteur (15) provoquant une optimisation du mode de fonctionnement du tracteur (3) indépendamment du mode de fonctionnement de l'outil porté (5).

4. Agencement de machine agricole selon la revendication
3**caractérisé en**
**ce que** le système de régulation (21) associé
à l'automate de réglage du tracteur (15) comprend un système de régulation (21) pour optimiser le mode de fonctionnement de l'outil porté (5) et le système d'assistance au conducteur (6) optimise le mode de fonctionnement du tracteur (3) et/ou de l'outil porté (5).

5. Agencement de machines agricoles selon la revendication 4,
**caractérisé en**
**ce que** le système de régulation (21, 22) destiné à optimiser le mode de fonctionnement de l'outil porté (5) est basé sur le système de régulation (21) enregistré dans l'automate de réglage du tracteur (15) ou sur un système de régulation (22) mis à disposition par l'outil porté respectif.

6. Agencement de machines agricoles selon la revendication 5,
**caractérisé en**
**ce que** le système de régulation (21, 22) destiné à optimiser le mode de fonctionnement de l'outil porté (5) est enregistré dans un dispositif de commande (12) associé au tracteur (3), réalisé de préférence sous forme d'ordinateur de tâches (23), ou dans un dispositif de commande (13) associé à l'outil porté (5), réalisé de préférence sous forme d'ordinateur de tâches (24).

7. Agencement de machine agricole selon l'une des revendications précédentes,
**caractérisé en**
**ce que** le tracteur (3) et l'au moins un outil porté (5) adapté à celui-ci comprennent des dispositifs de commande (26, 27) basés sur ISO et le système d'assistance au conducteur (6) commande les automates de réglage (15, 16) formés par les dispositifs de commande (26, 27) en tant que superviseur (28), de sorte qu'une optimisation de l'ensemble du processus de travail s'établit.

8. Agencement de machine agricole selon l'une des revendications précédentes,
**caractérisé en**
**ce que** le système d'assistance au conducteur (6) comprend des stratégies sélectionnables (29) pour optimiser le mode de fonctionnement du tracteur (3) et/ou de l'outil porté (5) adapté à celui-ci, les stratégies sélectionnables (29) étant des stratégies spécifiques au tracteur, des stratégies spécifiques à l'outil porté et/ou une combinaison des deux.

9. Agencement de machines agricoles selon la revendication
8**caractérisé en**
**ce que** les stratégies sélectionnables (29) comprennent au moins une ou plusieurs des stratégies "Efficacité" (39), "Performance" (40), "Qualité du travail" (41), "Equilibre" (42), "Préservation du sol" (43), "Confort" (44) et/ou "Personnalisé" (45).

10. Agencement de machines agricoles selon la revendication
9**caractérisé en**
**ce que** :la stratégie d'optimisation " Efficacité " (39) vise à optimiser la consommation de carburant et/ou les heures de fonctionnement de l'agencement de machines (1) et/ou le temps nécessaire aux manœuvres dites en bout de champ ; la stratégie d'optimisation " Performance " (40) vise à augmenter la surface travaillée et/ou la masse de produits agricoles traités et/ou les heures de fonctionnement de l'agencement de machines (1) ; la stratégie d'optimisation "qualité du travail" (41) a pour effet d'optimiser les paramètres de réglage (46) du tracteur (3) et/ou de l'outil porté (5) ; la stratégie d'optimisation "équilibre" (42) permet de régler un rapport variable entre "puissance" (40) et "efficacité" (39) ; la stratégie d'optimisation "préservation du sol" (43) réduit la pression au sol et/ou le compactage du sol provoqués par l'ensemble de machines (1) et/ou optimise la pression de gonflage des pneumatiques, le lestage et le poids de l'ensemble de machines, le type de pneumatiques, le mode de direction et/ou le patinage du châssis ; la stratégie d'optimisation "confort" (44) provoque un réglage défini par l'utilisateur du comportement vibratoire et/ou du comportement d'accélération et/ou du volume sonore de l'ensemble de machines (1) ; la stratégie d'optimisation "définie par l'utilisateur" (45) permet de combiner toutes les stratégies 29 disponibles avec des proportions variables.

11. Agencement de machine agricole selon l'une des revendications précédentes,
**caractérisé en**
**ce que** le système d'assistance au conducteur (6) comprend un module "but d'utilisation" (30), **en ce qu'**un but d'utilisation (32) est déterminé de manière dialoguée par l'opérateur (31) et le module "but d'utilisation" (30) pouvant comprendre un ou plusieurs des buts d'utilisation "travail du sol" (33), "travail à la prise de force" (34), "travail de transport" (35) et "travail de chargement frontal" (36).

12. Agencement de machines agricoles selon la revendication 11
, **caractérisé en ce que**
**en ce que** les paramètres (37) définis par l'opérateur dans le module "but d'utilisation" (30) et les paramètres de travail (46) générés après l'exécution d'une stratégie d'optimisation (29) sont mémorisés sous la forme d'un jeu de données (38, 49) séparé ou commun et le ou les jeux de données (38, 49) peuvent être appelés et édités de manière répétée, le ou les jeux de données (38, 49) pouvant notamment être mémorisés et appelés à nouveau de manière personnalisée.

13. Agencement de machine agricole selon l'une des revendications précédentes,
**caractérisé en**
**ce que** le ou les jeux de données mémorisables (38, 49) comprennent des jeux de données spécifiques pour "travaux dans les champs" et "trajet sur route" et les jeux de données spécifiques (38, 49) pour "travaux dans les champs" et "trajet sur route" peuvent être directement appelés.

14. Agencement de machine agricole selon l'une des revendications précédentes,
**caractérisé en**
**ce que** le dialogue entre le système d'assistance à la conduite (6) et l'opérateur (31) se fait en langage naturel.

15. Agencement de machine agricole selon l'une des revendications précédentes,
**caractérisé en**
**ce que** le dialogue entre le système d'assistance à la conduite (6) et l'opérateur (31) comprend au moins les étapes suivantes
a) Activation du système d'assistance à la conduite (6) par l'opérateur (31) ou automatiquement lors de l'identification d'une situation critique (51)
b) Activation d'un module "but d'utilisation" (30), l'opérateur (31) provoquant l'édition du but d'utilisation (32)
c) Activation d'un module "champ/route" (55), l'opérateur (31) prédéfinissant le but d'utilisation "champ" ou "route" ou le système d'assistance à la conduite (6) reconnaissant automatiquement le but d'utilisation
d) Démarrage du module "Optimisation" (57), l'opérateur (31) étant invité à sélectionner une stratégie d'optimisation (29)
e) En fonction de la stratégie d'optimisation sélectionnée (29), activation d'une optimisation guidée par dialogue (62) de paramètres de travail (37, 46) du tracteur (3) et/ou de l'outil porté (5) adapté au tracteur (3).

16. Agencement de machines agricoles selon la revendication
15**caractérisé en**
**ce que** les paramètres de travail éditables (37, 46) du tracteur (3) sont un ou plusieurs des paramètres suivants :
la poussée du moteur ; l'accélération ; le choix de la zone de conduite appropriée dans la mesure où l'entraînement du tracteur (3) permet de fonctionner dans des zones de conduite ; la vitesse de conduite et la définition de valeurs de vitesse pour un régulateur de vitesse connu en soi ; l'activation et la désactivation d'un entraînement à quatre roues motrices ; l'activation et la désactivation d'un différentiel connu en soi ; la détermination de l'état des pneus, comprenant une proposition de pneus appropriés ;
la définition de masses de lestage appropriées (64) pour l'attelage avant et/ou arrière ;
la suspension de la cabine ; la suspension de l'essieu avant ; le comportement et le type d'attelage de l'outil au tracteur (3) ; l'adaptation des réglages hydrauliques, les soupapes à utiliser, la quantité d'huile nécessaire et les temps de refoulement de l'huile ; une pression de gonflage optimisée des pneumatiques ; la vitesse de rotation de la prise de force ; le type et la conception de la prise de force ; le mode de direction à sélectionner, tel que la marche en crabe connue en soi, la direction standard, la marche arrière, la direction selon les données GPS et/ou les programmes de conduite.

17. Agencement de machines agricoles selon la revendication 15**caractérisé en**
**ce que** l'outil porté (5) est conçu comme un outil de travail du sol (4, 65) et les paramètres de travail éditables (37, 46) de l'outil porté (5) sont un ou plusieurs des paramètres suivants :
la profondeur de travail des outils ; la largeur de travail de l'outil porté (5) ; la précontrainte des vérins de traction ; le nombre et le type des outils montés ; la vitesse de travail de l'outil porté (5) ; le réglage des outils présents ; le type d'attelage de l'outil porté (5) au tracteur (3) ; le type et l'état d'une sécurité anti-pierres connue à ce jour ; le type et l'état d'un dispositif de transport ; le type et l'état d'une unité d'appui et/ou de guidage.
